# EUROPEAN PATENT APPLICATION

(11) **EP 4 693 623 A1**
(43) Date of publication of application: **11.02.2026**
(21) Application number: 24819471.4
(22) Date of filing: 16.04.2024
(51) Int. Cl.: H01M 50/102, H01M 50/105, H01M 50/126, H01M 50/159, H01M 50/16

(54) **POUCH FILM, POUCH CELL, CELL STACK, METHOD FOR MANUFACTURING POUCH FILM, AND METHOD FOR MANUFACTURING POUCH CELL**

(30) Priority: 09.06.2023 KR 20230074464
(71) Applicant: LG Energy Solution, Ltd., Seoul 07335 (KR)
(72) Inventor: PARK, Eun Suk, Daejeon 34122 (KR); HWANG, Ji Young, Daejeon 34122 (KR); LEE, Yu Jin, Daejeon 34122 (KR); JU, Hye Yeong, Daejeon 34122 (KR); KIM, Sang Hun, Daejeon 34122 (KR); YU, Hyung Kyun, Daejeon 34122 (KR)
(74) Representative: Plasseraud IP
(86) International application number: PCT/KR2024/005074
(87) International publication number: WO 2024/253319

(57) **Abstract**

The present disclosure relates to a pouch cell capable of efficiently discharging gas inside the pouch to the outside of the pouch so as to delay or prevent the venting phenomenon of the pouch caused by the internal gas generated during the charging or discharging process of the pouch cell, and a manufacturing method for the same.

The pouch cell according to the present disclosure may include an electrode assembly, and a pouch in which the electrode assembly is disposed, wherein the pouch may include a first layer and a second layer through which gas is permeable, and a barrier layer disposed between the first layer and the second layer and having a plurality of holes formed to allow gas to pass through.

## Description

### TECHNICAL FIELD

### CROSS-REFERENCE TO RELATED APPLICATIONS

The present application claims priority to Korean Patent Application No. 10-2023-0074464 filed on June 9, 2023 in the Republic of Korea, the disclosures of which are incorporated herein by reference.

### TECHNICAL FIELD

The present disclosure relates to a pouch cell and a manufacturing method for the same, and more specifically, to a secondary battery pouch cell capable of being charged and discharged, a pouch film used in the manufacture of the pouch cell, a cell stack in which a plurality of pouch cells are stacked, a manufacturing method for the pouch film, and a manufacturing method for the pouch cell.

### BACKGROUND ART

Recently, the depletion of fossil fuels forces to increase the price of energy sources and has strong impact on the growing attention towards environmental pollution, and the need for eco-friendly alternative energy sources is an essential factor for future life. In this context, a variety of energy generation technologies including solar energy, wind energy, tidal energy and the like are being studied, and attention is directed to energy storage systems such as batteries to make use of the produced electrical energy more efficiently.

Furthermore, with the technological development of, and increasing demand for, electronic mobile devices and electric vehicles using batteries, the demand for batteries as an energy source is rapidly increasing, and accordingly, many studies are being conducted on batteries that meet a variety of needs.

Batteries that store electrical energy may generally be divided into primary batteries and secondary batteries. Primary batteries are disposable consumable batteries, whereas secondary batteries are rechargeable batteries manufactured using materials in which oxidation and reduction processes between current and materials are repeatable. That is, when a reduction reaction is performed on the material by current, the power is charged, and when an oxidation reaction is performed on the material, the power is discharged. As such charging and discharging are repeatedly performed, electricity is generated.

Secondary batteries may be classified into cylindrical cells, pouch cells, and prismatic cells according to their shape. Among them, the pouch cell may be manufactured by accommodating an electrode assembly in the form in which a positive electrode, a negative electrode, a separator, and the like are stacked inside the pouch, and sealing the outer portion of the pouch.

Meanwhile, an electrolyte solution together with an electrode assembly may be accommodated inside the pouch of the pouch cell. At this time, the residual moisture in the electrolyte solution inside the pouch of the pouch cell or the moisture infiltrated from the outside reacts with lithium salt to generate hydrogen fluoride (HF), and gases such as carbon dioxide, carbon monoxide, ethylene, methane, and the like may be generated due to decomposition of the electrolyte solution. In addition, depending on the material of the positive electrode included in the electrode assembly of the pouch cell, hydrogen and HF may be additionally generated, which may lead to overheating due to overcharging and internal short circuits during the charging and discharging process. Accordingly, a large amount of gas may be generated inside the pouch. With such gas, the pressure inside the pouch increases, and the increased pressure may cause a swelling phenomenon in which the pouch swells or a venting phenomenon in which a portion of the pouch bursts.

In a conventional pouch cell, the pressure was increased by the internal gas, and the sealing of the sealed portion was damaged due to the increased pressure. In addition, there was a problem that decrease in the sealing property of the sealed portion caused a venting phenomenon in which the pouch was opened by pressure.

Since a pouch cell in which the venting phenomenon occurs cannot function as a secondary battery, there is a need for a pouch cell including a configuration capable of discharging gas inside the pouch to the outside of the pouch to prevent or delay the occurrence of the venting phenomenon.

### SUMMARY

### TECHNICAL PROBLEM

The present disclosure is directed to providing a pouch cell capable of efficiently discharging gas inside the pouch to the outside of the pouch so as to delay or prevent the venting phenomenon of the pouch caused by the internal gas generated during the charging or discharging process of the pouch cell, and a manufacturing method for the same.

### TECHNICAL SOLUTION

A pouch cell according to the present disclosure may include an electrode assembly, and a pouch in which the electrode assembly is disposed, wherein the pouch may include a first layer and a second layer through which gas is permeable, and a barrier layer disposed between the first layer and the second layer and having a plurality of holes formed to allow gas to pass through.

The pouch may include a cup portion where the electrode assembly is accommodated and a terrace portion disposed on the edge of the cup portion, wherein the holes of the barrier layer may be formed in the terrace portion.

The terrace portion may include a sealing portion sealed by sealing, and the holes of the barrier layer may be formed between the cup portion and the sealing portion.

The pouch may include a cup portion having one surface on which the electrode assembly is placed and an edge surface connected to an edge of the one surface, and the holes of the barrier layer may be formed on the edge surface.

The plurality of holes may be arranged to be spaced apart from each other at regular intervals.

The pouch may further include a nylon layer disposed between the barrier layer and the second layer and having a nylon-based resin.

A pouch cell according to the present disclosure may include an electrode assembly, and a pouch in which the electrode assembly is disposed, wherein the pouch may include a permeable layer, including a polymer, through which gas is permeable, and a barrier layer including metal and having a plurality of holes formed to allow gas to pass through.

A pouch film according to the present disclosure may include a first layer and a second layer through which gas is permeable, and a barrier layer disposed between the first layer and the second layer, wherein a plurality of holes may be formed in the barrier layer to allow gas to pass through.

In a cell stack according to the present disclosure, a plurality of pouch cells including an electrode assembly and a pouch in which the electrode assembly is disposed are stacked, wherein the pouch may include a first layer and a second layer through which gas is permeable, and a barrier layer disposed between the first layer and the second layer and having a plurality of holes formed to allow gas to pass through, wherein the plurality of holes may be formed on surfaces other than surfaces in contact with other adjacent pouch cells.

A manufacturing method for a pouch film according to the present disclosure, which is used in the manufacture of the pouch cell, may include a step of forming a plurality of holes to allow gas to pass through a metal film including metal, a step of disposing the metal film on one surface of a first film including a polyolefin-based resin, a step of disposing a second film on one surface of the metal film, and a step of laminating the first film, the metal film, and the second film.

The second film may include a nylon film including a nylon-based resin and disposed on one surface of the metal film, and an outer film including an insulating material and disposed on one surface of the nylon film.

A manufacturing method for a pouch cell according to the present disclosure may include a step of forming a plurality of holes to allow gas to pass through a first area of a metal film including metal, a step of disposing the metal film on one surface of a first film including a polyolefin-based resin, a step of disposing a second film on one surface of the metal film, a step of manufacturing a pouch film by laminating the first film, the metal film, and the second film, a step of forming a portion where an electrode assembly is accommodated by molding a second area spaced apart from the first area in the pouch film, a step of disposing the electrode assembly on the molded portion of the pouch film, and a step of sealing the pouch film so that it is sealed.

### ADVANTAGEOUS EFFECTS

According to a preferred embodiment of the present disclosure, gas inside the pouch generated during the charging or discharging process of the pouch cell may be efficiently discharged to the outside.

Accordingly, the safety of the pouch cell may be improved by delaying or preventing the venting phenomenon of the pouch caused by the gas inside the pouch.

In addition, gas discharged while a plurality of pouch cells are stacked is not directed to adjacent pouch cells, so that the gas may be discharged efficiently.

In addition, since the holes for gas discharge formed in the barrier layer do not affect the coupling relationship of other configurations, it is possible to prevent the coupling force between the configurations forming the pouch cell from weakening.

In addition, since holes are formed in the barrier layer during the manufacture of the pouch film, an additional process for combining gas exhaust parts is unnecessary, which may improve the efficiency of the pouch cell manufacturing process.

The effects according to the present disclosure are not limited by the above-described contents, and more various effects are included in this specification.

### BRIEF DESCRIPTION OF THE DRAWINGS

FIG. 1 is a perspective view schematically showing a pouch cell according to Embodiment 1 of the present disclosure.
FIG. 2 is a cross-sectional view schematically showing a cross-section taken along line A-A' in FIG. 1 of the present disclosure.
FIG. 3 is a plan view schematically showing a barrier layer of a pouch according to Embodiment 1 of the present disclosure.
FIG. 4 is a perspective view schematically showing a pouch cell according to Embodiment 2 of the present disclosure.
FIG. 5 is a cross-sectional view schematically showing a cross-section taken along line A-A' in FIG. 4 of the present disclosure.
FIG. 6 is a plan view schematically showing a cell stack in which a plurality of pouch cells are stacked according to Embodiment 2 of the present disclosure.
FIG. 7 is a flow chart schematically showing a manufacturing method for a pouch cell according to Embodiment 3 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

In addition, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Embodiment 1

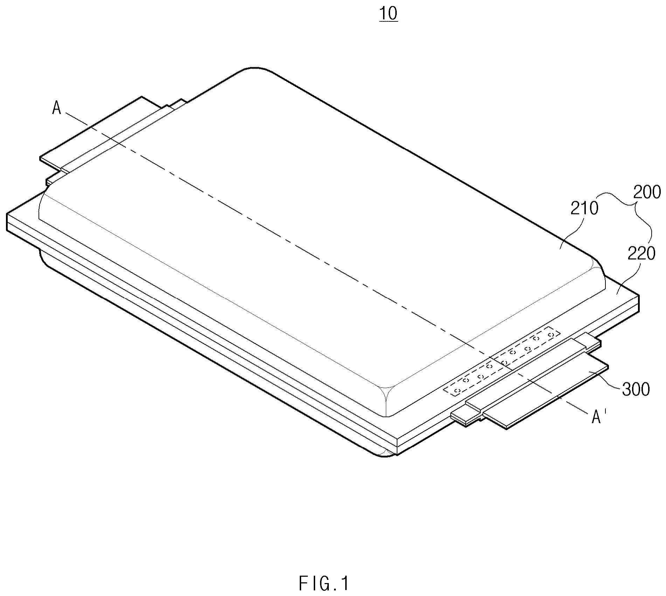

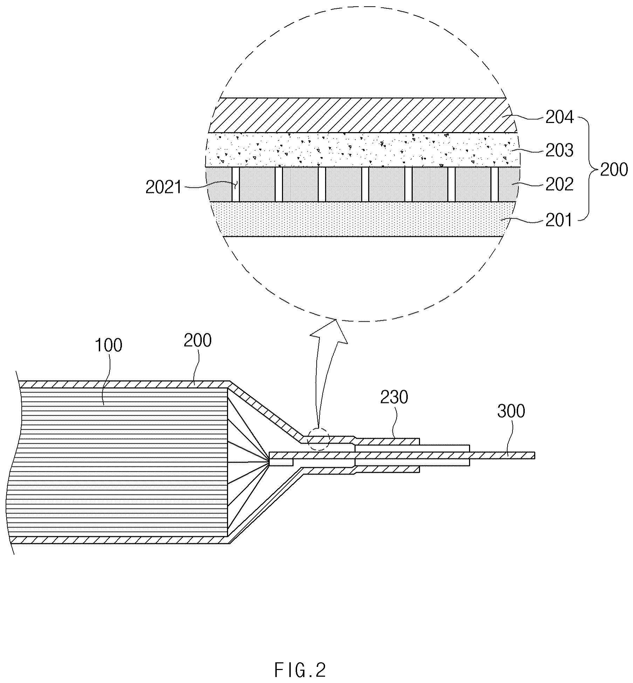

FIG. 1 is a perspective view schematically showing a pouch cell 10 according to Embodiment 1 of the present disclosure, and FIG. 2 is a cross-sectional view schematically showing a cross-section taken along line A-A' in FIG. 1 of the present disclosure.

The pouch cell 10 described in the present disclosure may refer to a secondary battery that can be charged and discharged. Specifically, it may refer to a secondary battery in which an electrode assembly 100 including a negative electrode, a positive electrode and a separator is disposed inside a pouch 200, and the pouch 200 surrounds the electrode assembly 100. More specifically, the pouch cell 10 may refer to a secondary battery in which an electrode assembly 100 including a negative electrode, a positive electrode and a separator is accommodated together with an electrolyte solution inside the pouch 200. However, the pouch cell 10 described in Embodiment 1 of the present disclosure is only one example, and is also applicable to other pouch cells, such as those having the edge surrounded by the pouch while both ends are closed with caps.

The electrode assembly 100 may have a stacked form of a negative electrode, a positive electrode and a separator, or a wound jelly-roll form, and the pouch 200 may accommodate the electrode assembly 100. Specifically, the pouch 200 may include a cup portion molded to accommodate the electrode assembly 100 and the electrolyte solution therein.

Referring to FIG. 1, the electrode lead 300 may be electrically connected to the electrode assembly 100 and may be disposed to protrude to the outside of the pouch 200. The pouch cell 10 may provide electrical energy to the outside by the electrode lead 300 protruding to the outside of the pouch 200. Therefore, the electrode lead 300 may be a conductor.

The lead film may cover the electrode lead 300 so that the pouch 200 and the electrode lead 300 are insulated from each other. Specifically, the lead film may be disposed on both surfaces of the electrode lead 300 to cover the electrode lead 300. The lead film may be configured as a pair and may be disposed on both surfaces of the electrode lead 300, respectively.

Meanwhile, the lead film may include an insulating material to insulate the pouch 200 from the electrode lead 300. The electrode lead 300 may be in the form of an approximately rectangular prism, but is not necessarily limited thereto.

As the pouch cell 10 is repeatedly charged and discharged, gas is generated, which may increase the pressure inside the pouch 200. If the pressure inside the pouch 200 is excessively increased, a venting phenomenon or the like may occur, and the pouch cell 10 may lose its function.

In this regard, the pouch cell 10 according to Embodiment 1 of the present disclosure may have holes 2021 formed in a portion of the layers constituting the pouch 200 in order to efficiently discharge gas. That is, the pouch 200 may be composed of a plurality of layers. In this case, among the plurality of layers constituting the pouch 200, the layer in which the hole 2021 is formed allows gas to move through the hole 2021, and the other layers allow gas to move through permeation. Therefore, gas generated inside the pouch 200 may be discharged to the outside of the pouch 200 due to internal pressure.

Referring to FIG. 2, the pouch 200 according to Embodiment 1 of the present disclosure may include a first layer 201, a barrier layer 202, and a second layer 204. That is, the pouch 200 may be manufactured by molding a pouch film including the first layer 201, the barrier layer 202, and the second layer 204. The first layer 201 and the second layer 204 of the pouch 200 may be permeable to gas, and the barrier layer 202 may be disposed between the first layer 201 and the second layer 204. In this case, a plurality of holes 2021 through which gas may pass may be formed in the barrier layer 202 of the pouch 200. Since the barrier layer 202 is a layer that is difficult for gas to permeate, gas may pass through the barrier layer 202 through the hole 2021 formed in the barrier layer 202.

However, the layer structure of the pouch 200 described in Embodiment 1 of the present disclosure is only one example, and the pouch may also be composed of two layers. For example, the pouch may include a permeable layer made of a polymer such as a polyolefin-based resin to allow gas to permeate, and a barrier layer made of a metal such as stainless steel to have a plurality of holes formed to allow gas to pass through. In this case, it may be easily applied to other pouch cells, such as those having the edge surrounded by the pouch while both ends are closed with caps, as described above.

The first layer 201 of the pouch 200 is made of a polymer, and may have sealing properties by heat as an innermost layer of the pouch 200. That is, a portion thereof may be melted by heat to have adhesive properties. Therefore, the pouch 200 may be sealed by bonding the first layers 201 facing each other by sealing. For example, the polymer for preparing the first layer 201 of the pouch 200 may be made of one or more materials selected from the group consisting of polyethylene, polypropylene, polycarbonate, polyethylene terephthalate, polyvinyl chloride, acrylic-based polymer, polyacrylonitrile, polyimide, polyamide, cellulose, aramid, nylon, polyester, polyparaphenylene benzobisoxazole, polyarylate, Teflon, and glass fiber. In particular, polyolefin-based resins such as polypropylene (PP) or polyethylene (PE) may be mainly used. Polypropylene (PP) has excellent mechanical properties such as tensile strength, rigidity, surface hardness, wear resistance and heat resistance, and chemical properties such as corrosion resistance, so that it may be mainly used to prepare the first layer 201. Furthermore, it may also be composed of cast polypropylene, acid modified polypropylene, or polypropylene-butylene-ethylene terpolymer. Here, the acid modified polypropylene may be maleic anhydride polypropylene (MAHPP). In addition, the first layer 201 may have a single film structure made of any one material or a composite film structure formed by separate layers of two or more materials.

The second layer 204 of the pouch 200 is made of a polymer as an outermost layer of the pouch 200, and may be formed on the outermost side to protect the pouch cell 10 from friction and collision with the outside. In addition, the second layer 204 may electrically insulate the electrode assembly 100 from the outside. For example, the polymer for preparing the first layer 201 of the pouch 200 may be made of one or more materials selected from the group consisting of polyethylene, polypropylene, polycarbonate, polyethylene terephthalate, polyvinyl chloride, acrylic-based polymer, polyacrylonitrile, polyimide, polyamide, cellulose, aramid, nylon, polyester, polyparaphenylene benzobisoxazole, polyarylate, Teflon, and glass fiber. In particular, a polymer such as polyethylene terephthalate (PET) having wear resistance and heat resistance is preferably used. In addition, the second layer 204 may have a single film structure made of any one material or a composite film structure formed by separate layers of two or more materials.

The barrier layer 202 of the pouch 200 may include a metal selected from the group consisting of copper (Cu), aluminum (Al), nickel (Ni), iron (Fe), carbon (C), chromium (Cr), manganese (Mn), and an alloy including two or more thereof, but is not particularly limited thereto. Preferably, the barrier layer 202 may include a metal selected from aluminum alloy and stainless steel (SUS).

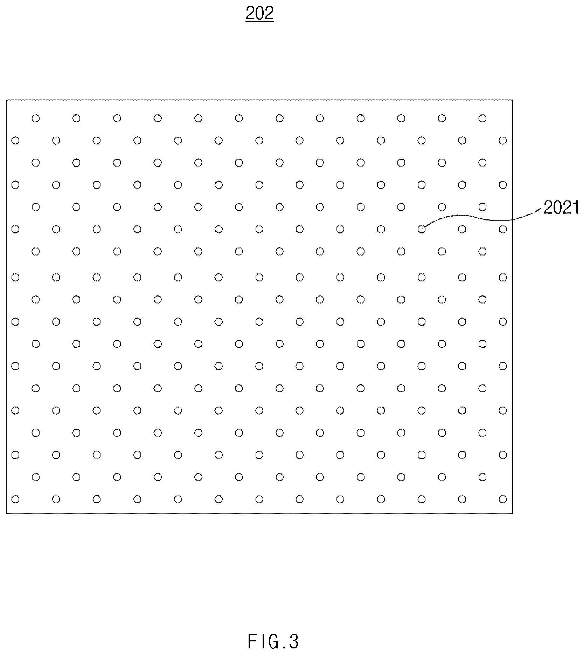

FIG. 3 is a plan view schematically showing the barrier layer 202 of the pouch 200 according to Embodiment 1 of the present disclosure.

A plurality of holes 2021 through which gas may move may be formed in the barrier layer 202 of the pouch 200 according to Embodiment 1 of the present disclosure. In this case, the hole 2021 is sufficient as long as it has a shape that allows gas to easily move, and the size, arrangement, and shape of the hole 2021 may vary. For example, the hole 2021 may be circular, and the plurality of holes 2021 may be arranged to be spaced apart from each other at regular intervals. When the holes 2021 are arranged to be spaced apart from each other at regular intervals, the movement of gas may be relatively uniformly distributed, thereby enabling efficient gas discharge. In addition, the process of forming the hole 2021 may be simplified, thereby improving the efficiency of the manufacturing process. Referring to FIG. 3, the plurality of holes 2021 may be formed in the same pattern while being spaced apart from each other at regular intervals.

For a more specific example, a portion where the hole 2021 is formed in the barrier layer 202 may be a rectangle approximately 17 mm wide and 10 mm long. One large-sized hole may be formed in this portion, or several small-sized holes may also be formed. Approximately 1 to 24 holes may be formed in consideration of the strength of the pouch 200 and the gas discharge rate.

Meanwhile, the pouch 200 according to Embodiment 1 of the present disclosure may further include a nylon layer 203. The nylon layer 203 may be disposed between the barrier layer 202 and the second layer 204, and may include a nylon-based resin. By including the nylon layer 203 including a nylon-based resin, the pouch 200 may have improved moldability due to excellent stretching characteristics.

The pouch 200 of the pouch cell 10 according to Embodiment 1 of the present disclosure may include a cup portion 210 and a terrace portion 220. Specifically, the electrode assembly 100 may be accommodated in the cup portion 210, and the terrace portion 220 may be disposed on the edge of the cup portion 210. In this case, the hole 2021 may be formed in the terrace portion 220. That is, the hole 2021 may be formed in a portion spaced apart from the portion where the electrode assembly 100 is disposed. When the hole 2021 is formed in the terrace portion 220, gas intended to move to the outside of the pouch 200 may be subject to relatively little interference from the electrode assembly 100, thereby efficiently discharging the gas to the outside of the pouch 200.

More specifically, the hole 2021 may be formed between the cup portion 210 and the sealing portion 230. In this regard, the terrace portion 220 may include the sealing portion 230. Here, the sealing portion may refer to a portion that is sealed by sealing in the terrace portion 220. That is, the sealing portion may refer to a portion that is sealed by heat and pressure in the pouch 200. When the hole 2021 is formed in the sealing portion 230, the sealing portion 230 may be in a form where the facing surfaces of the pouch 200 are bonded by sealing. Therefore, the space along the path for the gas inside the pouch 200 to move to the outside of the pouch 200 may be relatively insufficient. In the pouch cell 10 according to Embodiment 1 of the present disclosure, the hole 2021 is formed in a portion of the terrace portion 220 excluding the sealing portion 230, so that gas may be efficiently discharged to the outside of the pouch 200.

Meanwhile, the cup portion 210 of the pouch 200 may be formed by molding a pouch film composed of a plurality of layers. The pouch film may be pressurized with a molding device including a punch, a die, and the like to form the cup portion 210 having a concave shape where the electrode assembly 100 may be disposed. In this case, the periphery of the unmolded cup portion 210 may be the terrace portion 220.

In the pouch cell 10 according to Embodiment 1 of the present disclosure, the path through which gas is discharged therefrom to the outside of the pouch 200 is as follows. As the charging and discharging are repeated, gas is generated inside the pouch 200, and the gas expands to increase the internal pressure and concentration of the pouch 200. At this time, the gas permeates the first layer 201 and moves through the hole 2021 formed in the barrier layer 202. Thereafter, the gas may permeate the nylon layer 203 and the second layer 204 to be discharged to the outside of the pouch 200.

The pouch 200 of the pouch cell 10 according to Embodiment 1 of the present disclosure may efficiently discharge the gas inside the pouch 200 to the outside of the pouch 200 by the hole 2021 formed in the barrier layer 202. In addition, no separate members are added, so that the efficiency of the manufacturing process may be improved. Furthermore, since it may be manufactured in the same appearance as the conventional pouch cell 10, it may be equally applied to conventional frames and the like.

The pouch cell 10 according to Embodiment 1 of the present disclosure may efficiently discharge the gas inside the pouch 200 to the outside. Therefore, this may delay or prevent the occurrence of venting or the like, thereby improving the stability of the pouch cell 10.

### Embodiment 2

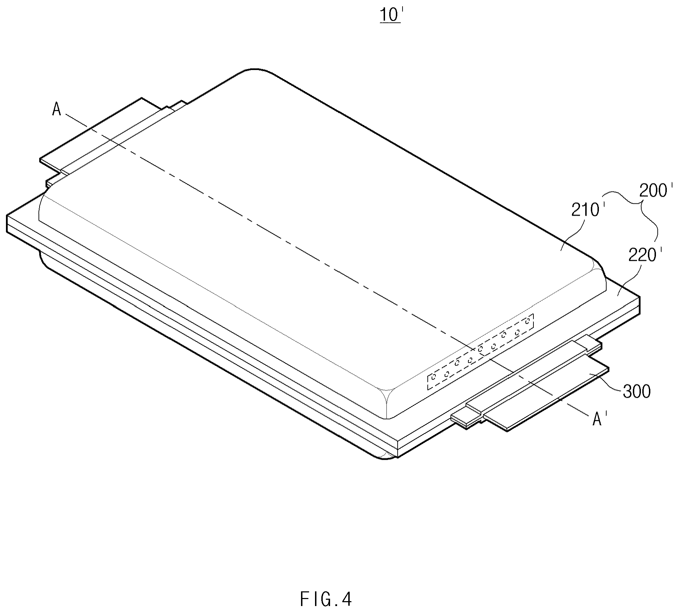

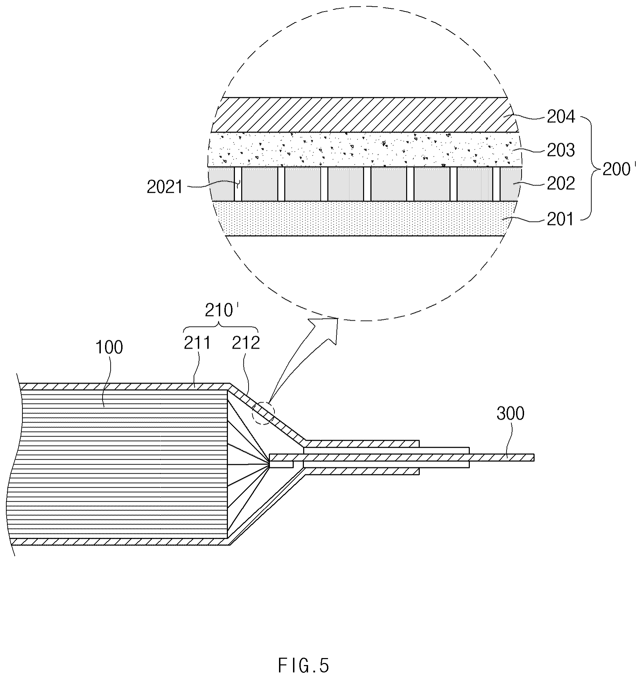

FIG. 4 is a perspective view schematically showing a pouch cell 10' according to Embodiment 2 of the present disclosure, and FIG. 5 is a cross-sectional view schematically showing a cross-section taken along line A-A' in FIG. 4 of the present disclosure.

Hereinafter, a detailed description of the same configuration as the configuration of the pouch cell 10 according to Embodiment 1 of the present disclosure will be omitted, and the differences will be mainly described.

The pouch cell 10' according to Embodiment 2 of the present disclosure may differ from the pouch cell 10 according to Embodiment 1 of the present disclosure in the position where the hole 2021 is formed.

Referring to FIGS. 4 and 5, the pouch 200' of the pouch cell 10' according to Embodiment 2 of the present disclosure may include a cup portion 210' and a terrace portion 220'. In this case, the cup portion 210' of the pouch 200' may include one surface 211 and an edge surface 212. Specifically, the one surface 211 of the cup portion 210' may be a surface on which the electrode assembly 100 is placed, and the edge surface 212 may be a surface connected to an edge of the one surface 211. When the one surface 211 of the cup portion 210' has an approximately rectangular cross-section, the edge surface 212 may include four surfaces.

In the pouch 200' of the pouch cell 10' according to Embodiment 2 of the present disclosure, the hole 2021 of the barrier layer 202 may be formed on the edge surface 212 of the cup portion 210'. Referring to FIG. 5, the distance between the edge surface 212 of the cup portion 210' and the electrode assembly 100 may be longer than the distance between the one surface 211 of the cup portion 210' and the electrode assembly 100. Therefore, when the hole 2021 is formed on the edge surface 212 of the cup portion 210', gas intended to move to the outside of the pouch 200' may be subject to relatively little interference from the electrode assembly 100, thereby efficiently discharging the gas to the outside of the pouch 200'.

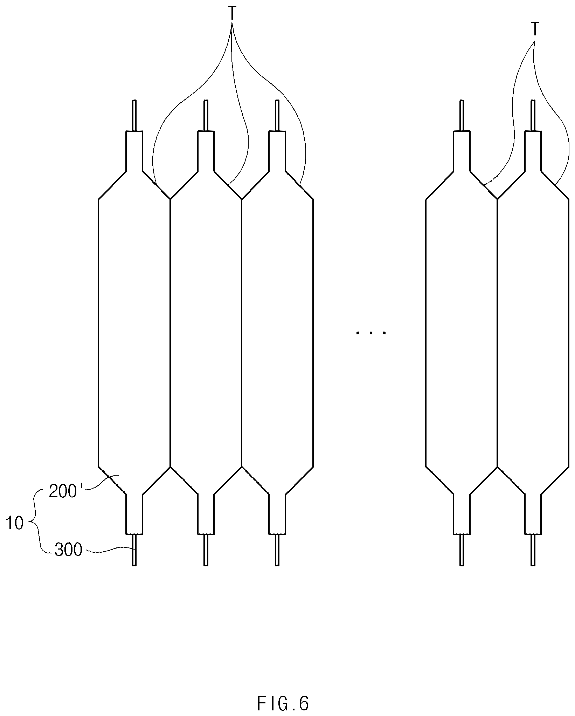

FIG. 6 is a plan view schematically showing a cell stack in which a plurality of pouch cells 10' are stacked according to Embodiment 2 of the present disclosure.

When a large amount of electrical energy is required, a plurality of pouch cells 10' may be assembled to form a battery module. At this time, a cell stack in which a plurality of pouch cells 10' are stacked may be disposed inside the battery module. In this case, gas may be discharged from each of the plurality of pouch cells 10' according to Embodiment 2 of the present disclosure.

Referring to FIG. 6, in the cell stack in which a plurality of pouch cells 10' are stacked according to Embodiment 2 of the present disclosure, a plurality of holes 2021 formed in one pouch cell 10' may be formed on surfaces other than surfaces in contact with other adjacent pouch cells 10'. That is, the edge surface 212 of the cup portion 210' in which the plurality of holes 2021 are formed in the pouch cell 10' may be a surface that is not in contact with other adjacent pouch cells 10'.

When a plurality of holes 2021 are formed on one surface 211 of the cup portion 210', there is a concern that gas discharge performance may be degraded by other adjacent pouch cells 10' when the gas inside the pouch 200' is discharged. However, in the cell stack in which a plurality of pouch cells 10' are stacked according to Embodiment 2 of the present disclosure, when the gas inside the pouch 200' of each pouch cell 10' is discharged, it may be subject to relatively little interference from other pouch cells 10', thereby efficiently discharging the gas to the outside of the pouch 200'.

The pouch cell 10' according to Embodiment 2 of the present disclosure may efficiently discharge the gas inside the pouch 200' to the outside even when applied to a battery module.

### Embodiment 3

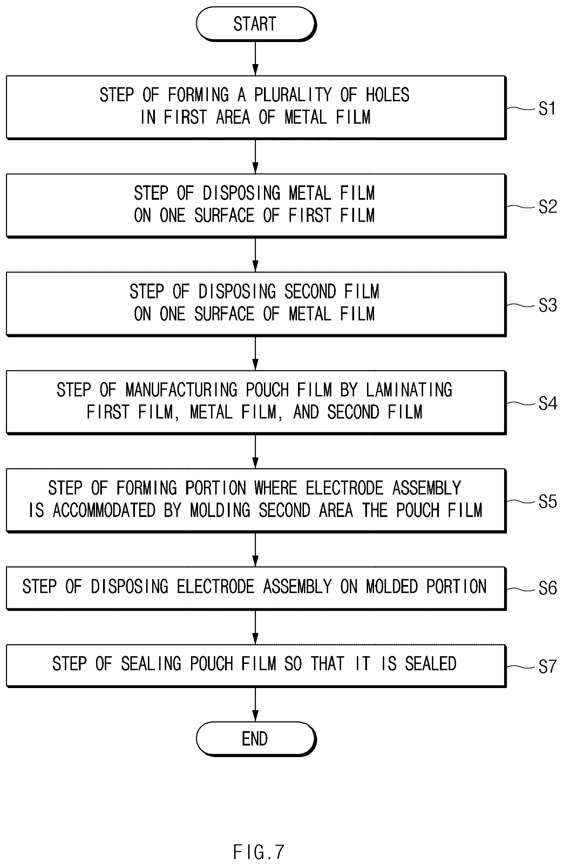

FIG. 7 is a flow chart schematically showing a manufacturing method for a pouch cell according to Embodiment 3 of the present disclosure.

The manufacturing method for a pouch cell according to Embodiment 3 of the present disclosure may include a step of manufacturing a pouch film. First, it may include a step S1 of forming a plurality of holes 2021 in a metal film including a metal. Specifically, the manufacturing method for a pouch cell may include the step S1 of forming a plurality of holes 2021 to allow gas to pass through the first area of the metal film. In this case, the plurality of holes 2021 may be formed in a portion of the metal film.

Thereafter, a step S2 of disposing the metal film on one surface of the first film may be performed. In this case, the first film may include a polyolefin-based resin. A second film may be disposed on one surface of the metal film disposed on one surface of the first film. That is, a step S3 of disposing the second film on one surface of the metal film may be performed. Therefore, one surface of the metal film may be in contact with the second film, and the other surface of the metal film may be in contact with the first film.

Thereafter, a step S4 of manufacturing a pouch film by laminating the first film, the metal film, and the second film may be performed. Here, laminating may refer to a process of pressing using heat and pressure.

After the pouch film is manufactured, a step S5 of forming a portion in which the electrode assembly 100 is accommodated by molding a second area in the pouch film may be performed. Here, the second area may be spaced apart from the first area where a plurality of holes 2021 are formed. Therefore, the portion that is molded in the pouch film may be a portion in which the hole 2021 is not formed. Since the first area where the hole 2021 is formed and the second area that is molded are different portions of the pouch film, the hole 2021 may not be affected by the molding of the pouch film.

After the pouch film is molded, a step S6 of disposing the electrode assembly 100 on the molded portion of the pouch film may be performed. Thereafter, a sealing step S7 of sealing the pouch film so that it is sealed may be performed. At this time, the pouch film may be sealed by sealing using heat and pressure.

Meanwhile, in the manufacturing method for a pouch cell according to Embodiment 3 of the present disclosure, the second film may include a nylon film and an outer film. Specifically, the nylon film includes a nylon-based resin and may be disposed on one surface of the metal film. In addition, the outer film includes an insulating material and may be disposed on one surface of the nylon film.

In the manufacturing method for a pouch cell according to Embodiment 3 of the present disclosure, only a process of forming the hole 2021 in the metal film is added in the process of manufacturing the pouch film, and there is no separate additional process of adding a configuration after the pouch film is sealed. Therefore, the pouch cell 10 capable of discharging gas may be manufactured through a relatively efficient manufacturing process.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [LIST OF REFERENCE NUMERALS]

10, 10': Pouch cell
100: Electrode assembly
200, 200': Pouch
201: First layer
202: Barrier layer
203: Nylon layer
204: Second layer
210, 210': Cup portion
211: One surface
212: Edge surface
220, 220': Terrace portion
230: Sealing portion
300: Electrode lead
2021: Hole

## Claims

1. A pouch cell comprising:
an electrode assembly; and
a pouch in which the electrode assembly is disposed,
wherein the pouch comprises:
a first layer and a second layer through which gas is permeable; and
a barrier layer disposed between the first layer and the second layer and having a plurality of holes formed to allow gas to pass through.

2. The pouch cell according to claim 1,
wherein the pouch comprises:
a cup portion where the electrode assembly is accommodated; and
a terrace portion disposed on the edge of the cup portion,
wherein the holes of the barrier layer are formed in the terrace portion.

3. The pouch cell according to claim 2,
wherein the terrace portion comprises a sealing portion sealed by sealing, and
the holes of the barrier layer are formed between the cup portion and the sealing portion.

4. The pouch cell according to claim 1,
wherein the pouch comprises a cup portion having one surface on which the electrode assembly is placed and an edge surface connected to an edge of the one surface, and
the holes of the barrier layer are formed on the edge surface.

5. The pouch cell according to claim 1,
wherein the plurality of holes are arranged to be spaced apart from each other at regular intervals.

6. The pouch cell according to claim 1,
wherein the pouch further comprises a nylon layer disposed between the barrier layer and the second layer and having a nylon-based resin.

7. A pouch cell comprising:
an electrode assembly; and
a pouch in which the electrode assembly is disposed,
wherein the pouch comprises:
a permeable layer, comprising a polymer, through which gas is permeable; and
a barrier layer comprising metal and having a plurality of holes formed to allow gas to pass through.

8. A pouch film comprising:
a first layer and a second layer through which gas is permeable; and
a barrier layer disposed between the first layer and the second layer,
wherein a plurality of holes are formed in the barrier layer to allow gas to pass through.

9. A cell stack where a plurality of pouch cells comprising an electrode assembly and a pouch in which the electrode assembly is disposed are stacked,
wherein the pouch comprises:
a first layer and a second layer through which gas is permeable; and
a barrier layer disposed between the first layer and the second layer and having a plurality of holes formed to allow gas to pass through,
wherein the plurality of holes are formed on surfaces other than surfaces in contact with other adjacent pouch cells.

10. A manufacturing method for a pouch film used in the manufacture of the pouch cell, comprising:
a step of forming a plurality of holes to allow gas to pass through a metal film comprising metal;
a step of disposing the metal film on one surface of a first film comprising a polyolefin-based resin;
a step of disposing a second film on one surface of the metal film; and
a step of laminating the first film, the metal film, and the second film.

11. The manufacturing method for a pouch film according to claim 10,
wherein the second film comprises:
a nylon film comprising a nylon-based resin and disposed on one surface of the metal film; and
an outer film comprising an insulating material and disposed on one surface of the nylon film.

12. A manufacturing method for a pouch cell comprising:
a step of forming a plurality of holes to allow gas to pass through a first area of a metal film comprising metal;
a step of disposing the metal film on one surface of a first film comprising a polyolefin-based resin;
a step of disposing a second film on one surface of the metal film;
a step of manufacturing a pouch film by laminating the first film, the metal film, and the second film;
a step of forming a portion where an electrode assembly is accommodated by molding a second area spaced apart from the first area in the pouch film;
a step of disposing the electrode assembly on the molded portion of the pouch film;
and
a step of sealing the pouch film so that it is sealed.
